# EUROPEAN PATENT APPLICATION

(11) **EP 4 571 721 A1**
(43) Date of publication of application: **18.06.2025**
(21) Application number: 23891638.1
(22) Date of filing: 16.11.2023
(51) Int. Cl.: G09F 13/04, G09F 13/10, B41J 2/01

(54) **PRINTED MATTER, METHOD FOR MANUFACTURING PRINTED MATTER, PROGRAM, AND PRINTING APPARATUS**

(30) Priority: 17.11.2022 JP 2022184338
(71) Applicant: Mimaki Engineering Co., Ltd., Tomi-city Nagano 389-0512 (JP)
(72) Inventor: HARAYAMA, Kenji, Tomi-city, Nagano 3890512 (JP)
(74) Representative: HKW Intellectual Property PartG mbB
(86) International application number: PCT/JP2023/041177
(87) International publication number: WO 2024/106491

(57) **Abstract**

Various designs are appropriately expressed by a printed matter. A printed matter 52 in which a plurality of ink layers overlap each other includes an image layer 202 and a transmission rate control layer 204, and as the transmission rate control layer 204 has a low-transmission region 302 and a high-transmission region 306, light is transmitted through the printed matter 52 such that a pattern corresponding to a shape of the high-transmission region 306 is visually recognizable from an observation-surface side when irradiated with rear-surface light, and the pattern corresponding to the shape of the high-transmission region 306 becomes inconspicuous when not irradiated with the rear-surface light, for an observer observing the image layer 202 from the observation-surface side.

## Description

### TECHNICAL FIELD

The present invention relates to a printed matter, a manufacturing method for a printed matter, a program, and a printing apparatus.

### BACKGROUND ART

Hitherto, methods for printing printed matters having various configurations have been known. For example, Patent Literature 1 discloses a configuration in which a first shielding print layer and a second shielding print layer are formed between a first pattern print layer and a second pattern print layer.

### CITATION LIST

### PATENT LITERATURE

Patent Literature 1: Japanese Unexamined Patent Publication No. 2019-45835

### SUMMARY OF INVENTION

### TECHNICAL PROBLEMS

It is desired to express various designs on a printed matter in some cases. In this case, it may be desired to use a printed matter having a new configuration in order to express a design that is difficult to express on a conventional printed matter. Therefore, an object of the present invention is to provide a printed matter, a manufacturing method for a printed matter, a program, and a printing apparatus that can solve the above problems.

### SOLUTIONS TO PROBLEMS

The inventor of the present application has intensively studied a method for expressing various designs using a printed matter. Then, the inventor found that a watermark-pattern-like expression can be implemented by forming an ink layer whose light transmission rate varies depending on a position. In addition, the inventor has found characteristics necessary for obtaining such an effect through further intensive studies, leading to the present invention.

In order to solve the above problems, the present invention provides a printed matter in which a plurality of ink layers overlap each other, the printed matter including: an image layer that is one of the ink layers in which an image to be observed from a predetermined observation-surface side is drawn with ink; and a light transmission rate adjustment layer that is one of the ink layers formed on a side of the image layer that is opposite to the observation-surface side, in which the light transmission rate adjustment layer has a low-transmission region and a high-transmission region, a light transmission rate of the high-transmission region is higher than a light transmission rate of the low-transmission region, and the light transmission rate adjustment layer causes light to be transmitted through the printed matter such that a pattern corresponding to a shape of the high-transmission region is visually recognizable by an observer observing the image layer from the observation-surface side, when irradiated with rear-surface light, which is light with which the printed matter is irradiated from a side opposite to the observation-surface side, and
causes light to be transmitted through the printed matter such that the pattern corresponding to the shape of the high-transmission region becomes inconspicuous when not irradiated with the rear-surface light.

With such a configuration, an appearance of the pattern corresponding to the shape of the high-transmission region in the light transmission rate adjustment layer can be changed according to whether or not the irradiation with the rear-surface light is performed. Therefore, with such a configuration, a watermark-pattern-like expression can be appropriately implemented in the printed matter. Accordingly, it is possible to appropriately express various designs using the printed matter. Furthermore, in this case, the design in the printed matter can be appropriately expressed without excessively increasing the number of ink layers in the printed matter.

In such a configuration, for example, a translucent medium such as a transparent film can be suitably used as the medium. Furthermore, the image layer is, for example, a layer in which an image is drawn with color ink. The image layer can also be considered as a layer in which an observation image, which is an image to be observed from the predetermined observation-surface side, is drawn with the ink. Further, the irradiation with the rear-surface light can be considered as the substantial irradiation with the rear-surface light. The absence of the irradiation with the rear-surface light can be considered as the substantial absence of the irradiation with the rear-surface light. Furthermore, a state in which the pattern corresponding to the shape of the high-transmission region becomes inconspicuous when not irradiated with the rear-surface light can be considered as a state in which the pattern becomes substantially inconspicuous according to a precision or the like of the design to be expressed by the printed matter.

Furthermore, in such a configuration, the light transmission rate adjustment layer is formed using, for example, a light reflective ink. As the light reflective ink, for example, it is conceivable to use a white ink. Furthermore, in this case, it is conceivable to make the light transmission rate of the low-transmission region and the light transmission rate of the high-transmission region different from each other by making the amount of the light reflective ink per unit area in the high-transmission region smaller than the amount of the light reflective ink per unit area in the low-transmission region in the light transmission rate adjustment layer. With such a configuration, the light transmission rate adjustment layer can be appropriately formed. Furthermore, in this case, it is also conceivable to cause the light transmission rate adjustment layer to function as a background of the image layer by forming the light transmission rate adjustment layer using the light reflective ink. In this case, it can be considered that the light transmission rate adjustment layer also serves as a light reflective layer.

Furthermore, in a case of forming the light transmission rate adjustment layer using the light reflective ink as described above, for example, when the light transmission rate adjustment layer is formed with only the light reflective ink, unintended irregularities may occur in the light transmission rate adjustment layer due to a difference in the amount of light reflective ink per unit area depending on a position. Furthermore, in this case, when the image layer is formed so as to overlap on the light transmission rate adjustment layer, the irregularities affect the image layer, and for example, there is a possibility that the pattern corresponding to the shape of the high-transmission region becomes conspicuous even when not irradiated with the rear-surface light due to shading caused by the irregularities. On the other hand, it is also conceivable to form the light transmission rate adjustment layer by further using, for example, a clear ink, which is a colorless and translucent ink. In this case, it is conceivable to form the light transmission rate adjustment layer such that an amount of the clear ink per unit area in the high-transmission region is larger than an amount of the clear ink per unit area in the low-transmission region. With such a configuration, it is possible to make it difficult for irregularities to occur in the light transmission rate adjustment layer and the image layer. Thus, it is possible to appropriately prevent the pattern corresponding to the shape of the high-transmission region from becoming conspicuous due to the shading caused by the irregularities. In this case, the amounts of the clear ink in the high-transmission region and the low-transmission region are preferably set so as to compensate for a difference in the amount of the light reflective ink. With such a configuration, it is possible to more appropriately prevent occurrence of unintended irregularities in the light transmission rate adjustment layer and the image layer. As such a light transmission rate adjustment layer, a layer having a uniform thickness is preferably formed. With such a configuration, unintended irregularities can be more appropriately prevented from occurring in the light transmission rate adjustment layer. The fact that the thickness of the layer is uniform can be considered as the fact that the thickness is substantially uniform according to the precision of the design to be expressed by the printed matter or the like. Further, the fact that the thickness of the layer is uniform can also be considered as the fact that the thickness in design is uniform.

Furthermore, it is also conceivable to intentionally form the irregularities as described above in the light transmission rate adjustment layer or the image layer depending on the design to be expressed by the printed matter. In addition, in a case where the image layer is formed on the medium first and the light transmission rate adjustment layer is formed thereon, irregularities occurring in the light transmission rate adjustment layer may not cause a large problem. In these cases, the light transmission rate adjustment layer may be formed without using the clear ink.

Furthermore, in order to express more various impressions by the printed matter, it is conceivable to change the light transmission rate depending on the position of the light transmission rate adjustment layer in more levels, and the like. In this case, the light transmission rate adjustment layer further has a medium-transmission region which is a region having a light transmission rate higher than the light transmission rate of the low-transmission region and lower than the light transmission rate of the high-transmission region. The medium -transmission region is formed such that the amount of the light reflective ink per unit area is larger than that in the high-transmission region and smaller than that in the low-transmission region. In this case, the light transmission rate adjustment layer causes the light to be transmitted through the printed matter such that a pattern corresponding to a shape of the medium-transmission region is visually recognizable by the observer in addition to the pattern corresponding to the shape of the high-transmission region when irradiated with relatively strong rear-surface light, and causes light to be transmitted through the printed matter such that the pattern corresponding to the shape of the high-transmission region is visually recognizable by the observer without making the pattern corresponding to the shape of the medium-transmission region conspicuous when irradiated with relatively weak rear-surface light. With such a configuration, more various designs can be appropriately expressed in the printed matter.

Furthermore, in the printed matter having the configuration described above, for example, a difference may occur in visibility of the pattern depending on a color of the image layer. In this case, in particular, it is conceivable that the color of the image layer is likely to affect the visibility of the pattern corresponding to the shape of the medium-transmission region set to have a medium light transmission rate. Therefore, it is also conceivable to adjust the light transmission rate of the medium-transmission region according to the color of the image layer. Furthermore, in this case, an amount of the light reflective ink at each portion of the medium-transmission region varies depending on a color to be applied at a position corresponding to that portion in the image layer. With such a configuration, the visibility of the pattern corresponding to the shape of the medium-transmission region can be appropriately adjusted. Furthermore, in this case, the amounts of the light reflective ink per unit area in the low-transmission region and the high-transmission region may be amounts set in advance for each region regardless of the color to be applied in the image layer. Furthermore, it is also conceivable to adjust the light transmission rate of the high-transmission region according to the color of the image layer depending on the configuration of the printed matter, the characteristic of the ink to use, and the like. In this case, an amount of the light reflective ink at each portion of the high-transmission region varies according to the color to be applied at the position corresponding to each portion in the image layer. With such a configuration, the visibility of the pattern corresponding to the shape of the high-transmission region can be appropriately adjusted. Furthermore, in this case, it is conceivable to set the amount of the light reflective ink per unit area in the low-transmission region to a predetermined amount regardless of the color to be applied in the image layer.

Furthermore, in the printed matter, it is also conceivable to express a design using a plurality of image layers. In this case, the printed matter includes a first image layer that overlaps the light transmission rate adjustment layer on one side in a thickness direction of the light transmission rate adjustment layer and a second image layer that overlaps the light transmission rate adjustment layer on the other side in the thickness direction of the light transmission rate adjustment layer. In a case of such a printed matter, the observation-surface side for the first image layer and the observation-surface side for the second image layer can be considered separately. In addition, it can be considered that the light transmission rate adjustment layer is formed on a side of the first image layer that is opposite to the observation-surface side for the first image layer, and is formed on a side of the second image layer that is opposite to the observation-surface side for the second image layer. With such a configuration, an image visible to the observer can be variously changed according to a difference in an observation direction in which the printed matter is observed, such as one side or the other side of the printed matter, and an influence of an environment in which one side or the other side of the printed matter is brighter. Accordingly, it is possible to appropriately express various designs.

Furthermore, in such a configuration, the printed matter may further include a light reflective layer formed using the light reflective ink, separately from the light transmission rate adjustment layer. In this case, the light transmission rate adjustment layer overlaps the image layer with the light reflective layer interposed therebetween. Even with such a configuration, various designs can be appropriately expressed using the printed matter having a configuration that is not excessively complicated. In this case, it is conceivable to use a layer formed using a light absorbing ink as the light transmission rate adjustment layer. As the light absorbing ink, an achromatic light absorbing ink may be used. As such a light absorbing ink, for example, it is conceivable to use a black ink or the like. Furthermore, in this case, the light transmission rate of the low-transmission region and the light transmission rate of the high-transmission region are made different from each other by making an amount of the light absorbing ink per unit area in the high-transmission region smaller than an amount of the light absorbing ink per unit area in the low-transmission region. Even with such a configuration, the light transmission rate adjustment layer can be appropriately formed.

In a case where the light transmission rate adjustment layer is formed using the light absorbing ink, the light transmission rate adjustment layer may also further have the medium-transmission region. In this case, the medium-transmission region is formed such that the amount of the light absorbing ink per unit area is larger than that in the high-transmission region and smaller than that in the low-transmission region. Further, the light transmission rate adjustment layer causes the light to be transmitted through the printed matter such that the pattern corresponding to the shape of the medium-transmission region is visually recognizable by the observer in addition to the pattern corresponding to the shape of the high-transmission region when irradiated with relatively strong rear-surface light, and causes light to be transmitted through the printed matter such that the pattern corresponding to the shape of the high-transmission region is visually recognizable by the observer without making the pattern corresponding to the shape of the medium-transmission region conspicuous when irradiated with relatively weak rear-surface light. Even with such a configuration, more various designs can be appropriately expressed in the printed matter.

Furthermore, as a configuration of the present invention, it is also conceivable to use a manufacturing method for a printed matter, a program, a printing apparatus, and the like having characteristics similar to the above. In this case, the manufacturing method for a printed matter can be considered as a manufacturing method for a printed matter having the above configuration, and the like. The program can be considered as a program or the like that causes a computer to perform processing for generating print data for controlling a printing operation of the printing apparatus. As such processing, it is conceivable to cause the computer to perform image layer data generation processing, light transmission rate adjustment layer data generation processing, and the like. The image layer data generation processing can be considered as processing of generating data representing the image layer, or the like. The light transmission rate adjustment layer data generation processing can be considered as processing of generating data representing the light transmission rate adjustment layer or the like. Furthermore, in this case, in the image layer data generation processing, the data representing the image layer is generated based on image data representing the observation image. In the light transmission rate adjustment layer data generation processing, the data representing the light transmission rate adjustment layer is generated based on image data representing the transmissive image that is an image that becomes visible in the printed matter under a predetermined condition. The printing apparatus can be considered as an apparatus that prints the printed matter having the above configuration. In this case, the printing apparatus includes a print head, a control unit, and the like.

### EFFECT OF THE INVENTION

According to the present invention, it is possible to appropriately express various designs using the printed matter.

### BRIEF DESCRIPTION OF THE DRAWINGS

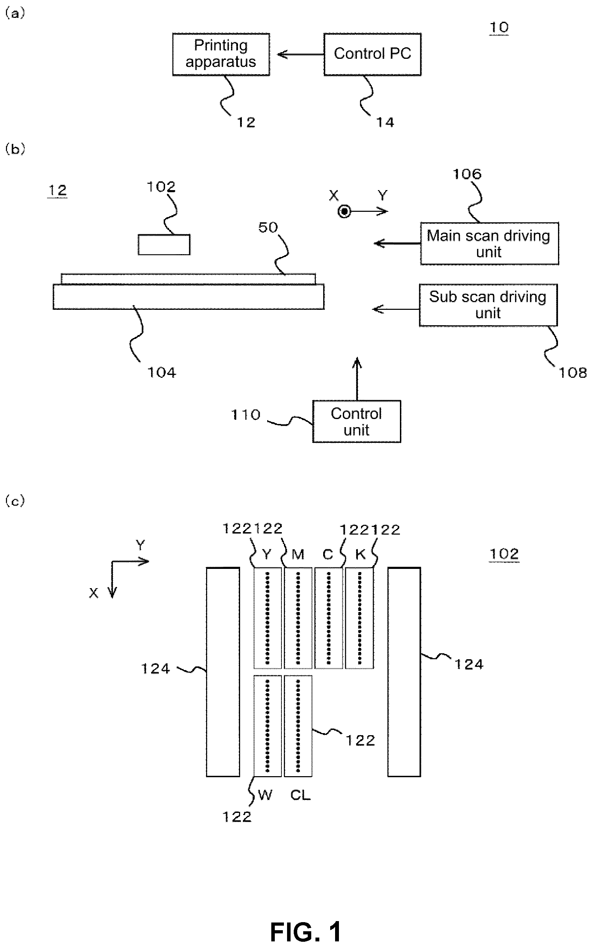

Fig. 1 is a diagram illustrating an example of a configuration of a printing system 10 according to an embodiment of the present invention. Fig. 1(a) illustrates an example of the configuration of the printing system 10. Fig. 1(b) illustrates an example of a configuration of a printing apparatus 12 in the printing system 10. Fig. 1(c) illustrates an example of a configuration of a head unit 102 in the printing apparatus 12.

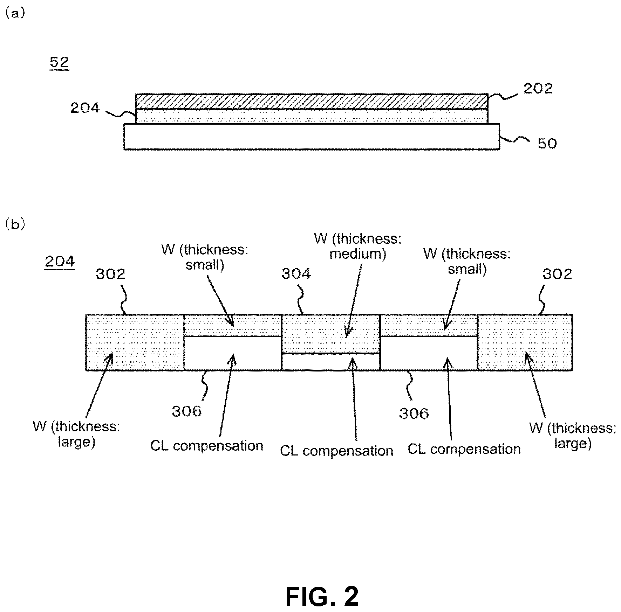

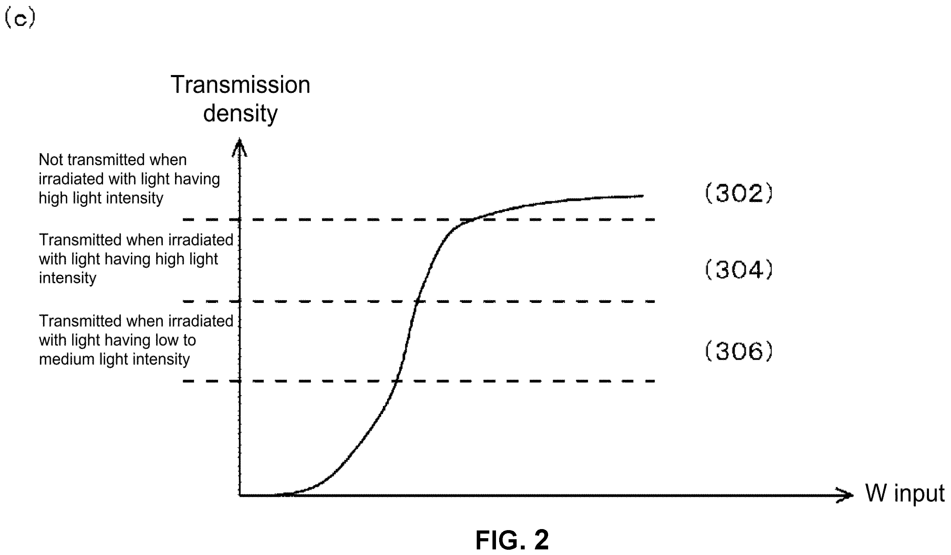

Fig. 2 is a diagram for describing an example of a printed matter 52. Fig. 2(a) illustrates an example of a configuration of the printed matter 52. Fig. 2(b) illustrates an example of a configuration of a transmission rate control layer 204 in the printed matter 52. Fig. 2(c) illustrates an example of how light is transmitted for the transmission rate control layer 204.

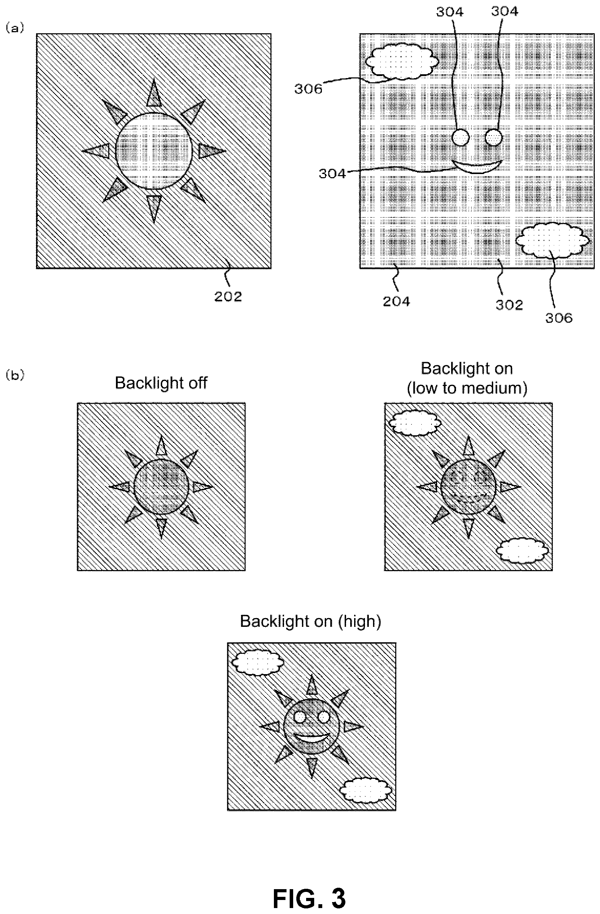

Fig. 3 is a view illustrating an example of a design expressed in the printed matter 52. Fig. 3(a) illustrates an example of a configuration of an image layer 202 and the transmission rate control layer 204 in the printed matter 52. Fig. 3(b) illustrates an example of the design expressed using the printed matter 52.

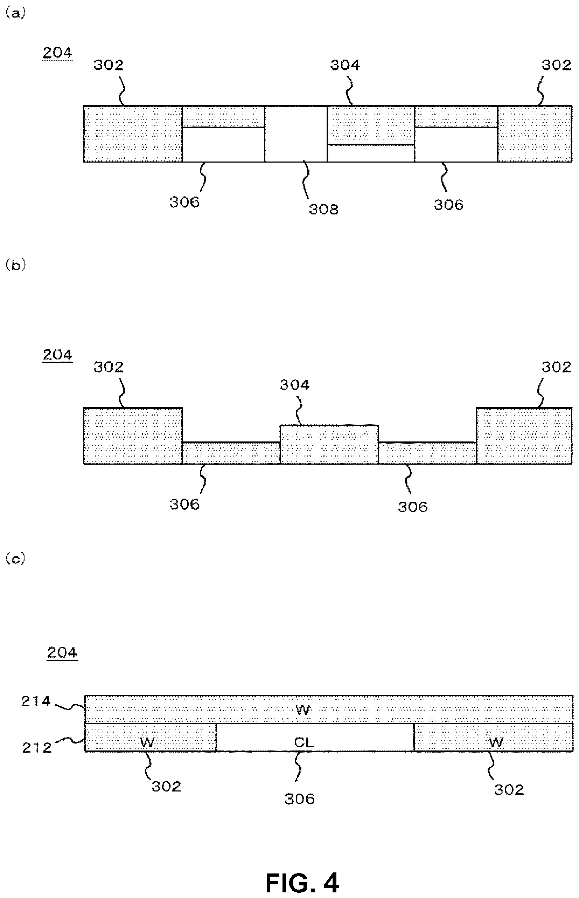

Fig. 4 is a diagram for describing various modified examples of the configuration of the transmission rate control layer 204. Figs. 4(a) to 4(c) illustrate the modified examples of the configuration of the transmission rate control layer 204.

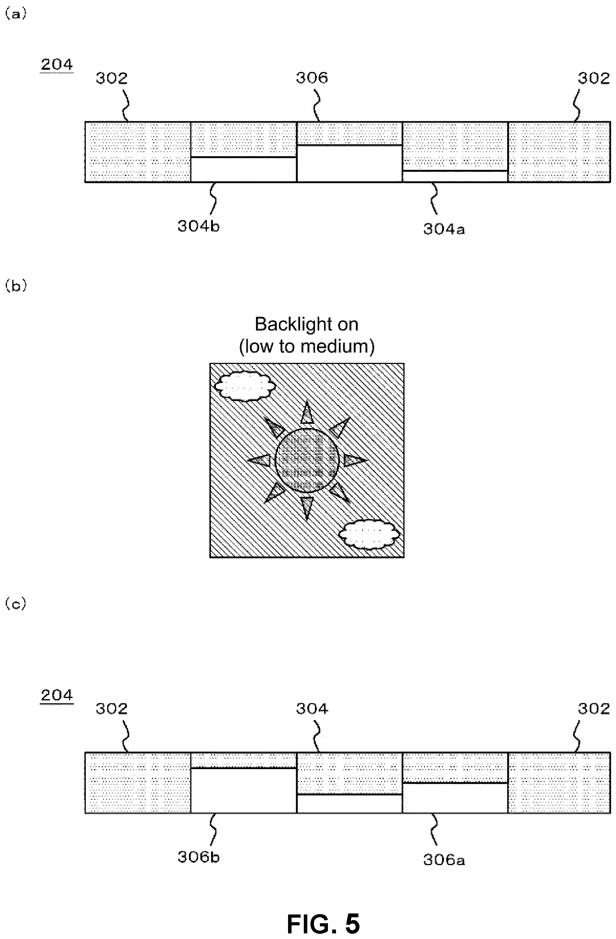

Fig. 5 is a diagram for describing a further modified example of the configuration of the transmission rate control layer 204. Fig. 5(a) illustrates a further modified example of the configuration of the transmission rate control layer 204. Fig. 5(b) illustrates an example of a design that is visible to an observer in a case where backlight is turned on at a low to medium light intensity. Fig. 5(c) illustrates a further modified example of the configuration of the transmission rate control layer 204.

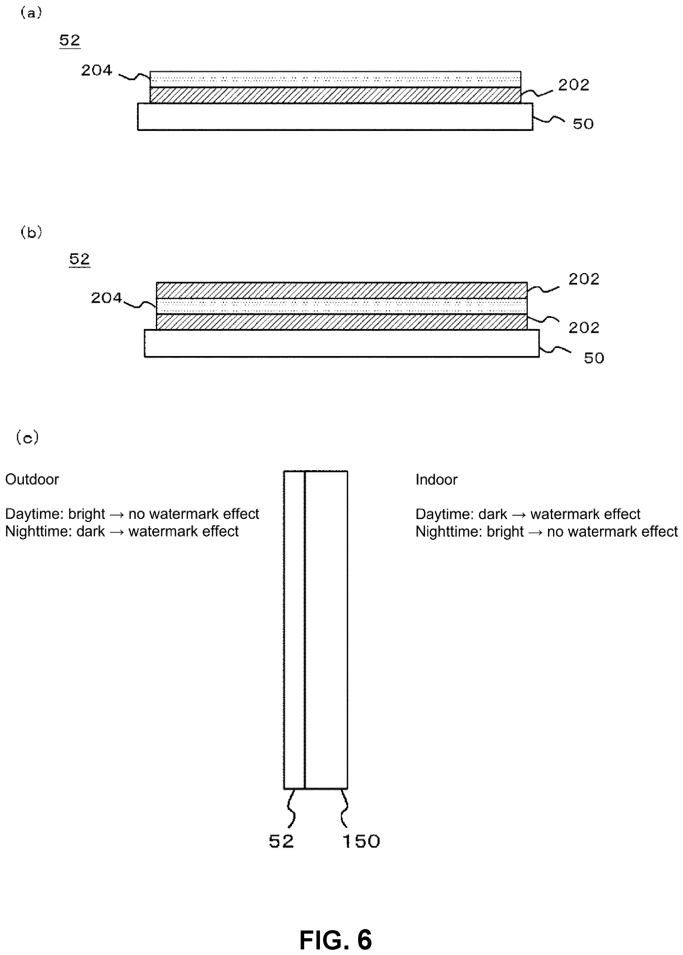

Fig. 6 is a diagram for describing a modified example of the configuration of the printed matter 52. Figs. 6(a) and 6(b) illustrate a modified example of the configuration of the printed matter 52. Fig. 6(c) illustrates an example of how to use the printed matter 52 having the configuration illustrated in Fig. 6(b).

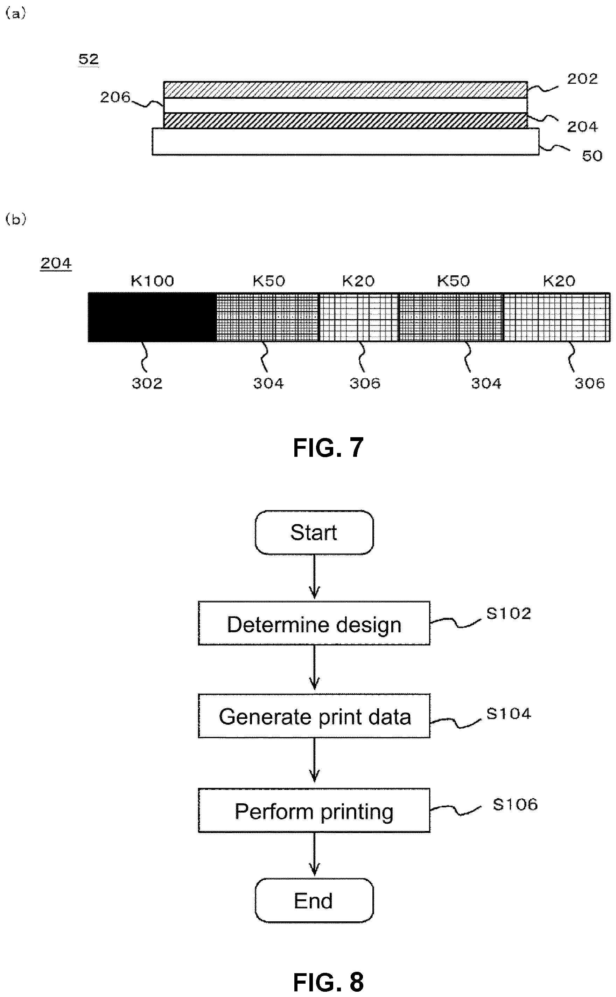

Fig. 7 is a diagram for describing a further modified example of the configurations of the printed matter 52 and the transmission rate control layer 204. Fig. 7(a) illustrates the modified example of the configuration of the printed matter 52. Fig. 7(b) illustrates an example of the configuration of the transmission rate control layer 204.
Fig. 8 is a flowchart illustrating an example of an operation of creating the printed matter 52 in the printing system 10.

### DESCRIPTION OF EMBODIMENTS

Hereinafter, an embodiment according to the present invention will be described with reference to the drawings. Fig. 1 illustrates an example of a configuration of a printing system 10 according to an embodiment of the present invention. Fig. 1(a) illustrates an example of the configuration of the printing system 10. Fig. 1(b) illustrates an example of a configuration of a printing apparatus 12 in the printing system 10. Fig. 1(c) illustrates an example of a configuration of a head unit 102 in the printing apparatus 12. Except for points described below, the printing system 10 and each configuration of the printing system 10 of the present example may be the same or have characteristics as those of a known printing system and each configuration of a known printing system.

The printing system 10 of the present example is a system that performs printing on a medium 50 that is a printing target by an inkjet method, and includes the printing apparatus 12 and a control personal computer (PC) 14. The printing apparatus 12 is an inkjet printer that performs a printing operation of ejecting ink onto the medium 50, and performs the printing operation on the medium 50 under the control of the control PC 14. The control PC 14 is a computer that controls an operation of the printing apparatus 12, and supplies print data representing an image to be printed to the printing apparatus 12 to control the operation of the printing apparatus 12. Furthermore, the control PC 14 generates the print data by performing, for example, raster image processor (RIP) processing, and supplies the generated print data to the printing apparatus 12. The generation of the print data may be performed by a computer other than the control PC 14. In this case, the control PC 14 receives the print data from the computer and supplies the print data to the printing apparatus 12.

As described above, the printing system 10 of the present example includes the printing apparatus 12 and the control PC 14, which are a plurality of apparatuses. In a modified example of the configuration of the printing system 10, for example, it is conceivable to implement the printing system 10 with one apparatus. In this case, for example, it is conceivable to use the printing apparatus 12 that also functions as the control PC 14. Furthermore, in a further modified example of the configuration of the printing system 10, it is also conceivable to implement the printing system 10 with three or more apparatuses, for example. In this case, for example, it is conceivable to implement the printing system 10 with a plurality of printing apparatuses 12 and the control PC 14. Furthermore, for example, it is also conceivable to implement the printing system 10 with three or more apparatus by further using another apparatus having some functions of the printing apparatus 12 or the control PC 14.

Furthermore, the printing apparatus 12 of the present example includes, for example, the head unit 102, a platen 104, a main scan driving unit 106, a sub scan driving unit 108, and a control unit 110 as illustrated in Fig. 1(b). The head unit 102 is a part that ejects the ink onto the medium 50. The head unit 102 of the present example includes, for example, a plurality of inkjet heads 122 and a plurality of ultraviolet light sources 124 as illustrated in Fig. 1(c). Furthermore, the plurality of inkjet heads 122 includes inkjet heads 122 for inks of respective colors of yellow (Y color), magenta (M color), cyan (C color), black (K color), and white (W color), and for clear ink.

In this case, the clear ink can be considered as an ink of clear color (CL color). The clear ink can also be considered as a colorless and transparent ink. The term "colorless and transparent" as used herein can be considered to mean that coloring is not intentionally performed. Further, the expression "coloring is not intentionally performed" means that a coloring material is not intentionally added. Furthermore, among the inks, inks of colors other than the clear ink and white ink can be considered as colored color inks. In this case, the white ink and the clear ink can be considered as colorless inks other than the color inks. Furthermore, the inks of the respective colors of yellow, magenta, cyan, and black are examples of inks of respective process colors. The process color can be considered as a basic color in color printing. Furthermore, black ink of the present example is an example of a light absorbing ink. The black ink can also be considered as an achromatic light absorbing ink or the like. The white ink is an example of a light reflective ink.

The plurality of inkjet heads 122 of the present example are an example of ejection heads, and eject an ultraviolet curable ink (UV ink) that is cured when irradiated with ultraviolet light. In this case, a known ultraviolet curable ink and the like can be suitably used. Furthermore, the inkjet heads 122 for the process colors of the present example are arranged side by side in a main scanning direction (a Y direction in the figure) orthogonal to a sub scanning direction with positions in the sub scanning direction (an X direction in the figure) set in advance in the printing apparatus 12 aligned. The sub scanning direction can be considered as a direction parallel to a direction (feeding direction) in which the medium 50 is fed with respect to the head unit 102. The main scanning direction can be considered as a direction parallel to a direction of relative movement (scanning direction) of the head unit 102 in a main scan described below. Furthermore, in the present example, the inkjet heads 122 for the white ink and the clear ink, which are the inkjet heads 122 for colors other than the process colors, are arranged side by side in the main scanning direction with the positions in the sub scanning direction aligned at positions where the positions in the sub scanning direction do not overlap with the inkjet heads 122 for the process colors. In a modified example of the configuration of the head unit 102, the arrangement of the plurality of inkjet heads 122 may be different from the above.

The plurality of ultraviolet light sources 124 of the head unit 102 are light sources that emit ultraviolet light for curing the ultraviolet curable ink. As the ultraviolet light source 124, for example, a configuration including a UV LED or the like can be suitably used. The ultraviolet light source 124 of the present example is disposed on each of one side and the other side of the arrangement of the plurality of inkjet heads 122 in the head unit 102 in the main scanning direction. The ultraviolet light source 124 irradiates the ink on the medium 50 with the ultraviolet light during the main scan described below to fix the ink to the medium 50. The plurality of ultraviolet light sources 124 of the present example are an example of fixing means for the ink. Furthermore, in a modified example of the configuration of the printing apparatus 12, it is conceivable to use an ink other than the ultraviolet curable ink. In this case, it is conceivable to use fixing means suitable for the ink to be used instead of the ultraviolet light source 124. For example, in a case of using an ink (evaporation-drying ink) in which a solvent in the ink is evaporated, it is conceivable to use a heater or the like as the fixing means.

The platen 104 is a table-shaped member having an upper surface on which the medium 50 is placed, and holds the medium 50 such that the medium 50 faces the plurality of inkjet heads 122 of the head unit 102. The main scan driving unit 106 is a driving unit that causes the head unit 102 to perform the main scan. The main scan can be considered as an operation of ejecting the ink while relatively moving with respect to the medium 50 in the main scanning direction. Causing the head unit 102 to perform the main scan can be considered as causing the inkjet head 122 of the head unit 102 to perform the main scan. During the main scan, the main scan driving unit 106 causes the inkjet head 122 of the head unit 102 to eject the ink to an ejection position set according to a resolution of printing according to an instruction of the control unit 110. The sub scan driving unit 108 is a driving unit that causes the head unit 102 to perform a sub scan. The sub scan can be considered as an operation of relatively moving with respect to the medium 50 in the sub scanning direction. Furthermore, the sub scan can also be considered as an operation of feeding the medium 50 in the sub scanning direction during the main scan. Causing the head unit 102 to perform the sub scan can be considered as causing the inkjet head 122 in the head unit 102 to perform the sub scan.

The control unit 110 is, for example, a part including a central processing unit (CPU) or the like in the printing apparatus 12, and controls an operation of each part of the printing apparatus 12. Furthermore, as described above, the main scan driving unit 106 of the present example causes the inkjet head 122 of the head unit 102 to eject the ink under the control of the control unit 110. In this case, it can be considered that the control unit 110 causes the printing apparatus 12 to create a printed matter by controlling an operation of the inkjet head 122. Furthermore, the control unit 110 of the present example causes the inkjet head 122 to eject the ink in each main scan based on the print data received from the control PC 14. Thus, the inkjet head 122 is caused to draw an image corresponding to at least a part of the print data in each main scan. According to the present example, the printing operation on the medium 50 can be appropriately performed by the printing apparatus 12.

Next, the printed matter created by the printing operation performed in the printing apparatus 12 will be described in detail. In this case, the printed matter can be considered as a printed product or the like created by drawing an image with the ink on the medium 50. It can also be considered that the printed matter is created by forming an ink layer on the medium 50 by the printing apparatus 12. Furthermore, the printing apparatus 12 of the present example creates, for example, the printed matter having a configuration illustrated in Fig. 2.

Fig. 2 is a diagram for describing an example of a printed matter 52 created by the printing apparatus 12 (see Fig. 1). Fig. 2(a) illustrates an example of a configuration of the printed matter 52. Fig. 2(b) illustrates an example of a configuration of a transmission rate control layer 204 in the printed matter 52. Fig. 2(c) illustrates an example of how light is transmitted for the transmission rate control layer 204. The transmission rate control layer 204 of the present example is an example of a light transmission rate adjustment layer. The printing apparatus 12 ejects the ink onto the translucent medium 50 to form the printed matter 52. A transparent film or the like can be suitably used for the medium 50. The printed matter 52 is a printed matter in which a plurality of ink layers overlap each other, and includes an image layer 202 and the transmission rate control layer 204 on the medium 50. The image layer 202 is a layer that expresses an image on a predetermined observation-surface side of the printed matter 52. In this case, the observation-surface side can be considered as a side facing an observer who observes a design expressed by the printed matter 52. The image layer 202 can also be considered as an ink layer in which the image observed from the observation-surface side is drawn with the ink. The image layer 202 can also be considered as a layer in which the image is drawn with the color ink.

The transmission rate control layer 204 is a layer for expressing a transmissive image (watermark image) which is an image that becomes visible under a predetermined condition in the printed matter 52. The transmission rate control layer 204 of the present example is an ink layer formed on a side of the image layer 202 that is opposite to the observation-surface side, and is formed using the white ink and the clear ink. By forming the transmission rate control layer 204 using the white ink, which is the light reflective ink, the transmission rate control layer 204 functions as a background of the image layer 202. The transmission rate control layer 204 can also be considered as an ink layer that also serves as a light reflective layer. Furthermore, the white ink and the clear ink can be considered as colorless inks having different light transmission rates. That is, the transmission rate control layer 204 of the present example can be considered to be formed of a plurality of types of colorless inks having different light transmission rates. In addition, the transmission rate control layer 204 has a plurality of regions having mutually different light transmission rates, thereby making the light transmission rate vary depending on a position. The transmission rate control layer 204 of the present example is an ink layer formed between the medium 50 and the image layer 202, and has a low-transmission region 302, a medium-transmission region 304, and a high-transmission region 306. The low-transmission region 302 is a region provided with a relatively low light transmission rate. The low-transmission region 302 of the present example can be considered as a region having a lower light transmission rate than the medium-transmission region 304 and the high-transmission region 306. In addition, the medium-transmission region 304 is a region having a higher light transmission rate than the low-transmission region 302 and a lower light transmission rate than the high-transmission region 306. The high-transmission region 306 is a region provided with a higher light transmission rate than the low-transmission region 302 and the medium-transmission region 304.

Furthermore, in the present example, the low-transmission region 302, the medium-transmission region 304, and the high-transmission region 306 have different light transmission rates by making amounts of the white ink per unit area on the medium 50 different from each other. More specifically, in this case, the light transmission rate of the low-transmission region 302 and the light transmission rate of the high-transmission region 306 are made different from each other by making the amount of the white ink per unit area in the high-transmission region 306 smaller than the amount of the white ink per unit area in the low-transmission region 302 in the transmission rate control layer 204. Furthermore, the light transmission rate of the medium-transmission region 304 and the light transmission rate of the low-transmission region 302 are made different by making the amount of the white ink in the medium-transmission region 304 smaller than the amount of the white ink in the low-transmission region 302. Furthermore, the light transmission rate of the medium-transmission region 304 and the light transmission rate of the high-transmission region 306 are made different by making the amount of the white ink in the high-transmission region 306 smaller than the amount of the white ink in the medium-transmission region 304. In this case, it can be considered that the amount of the white ink per unit area in the medium-transmission region 304 is larger than the amount of the white ink in the high-transmission region 306 and smaller than the amount of the white ink in the low-transmission region 302. Furthermore, it is conceivable to make the amount of the white ink per unit area in each region different for each region by making the number of ejection positions for ejecting the white ink in the main scan vary. It is conceivable to determine the ejection position for ejecting the white ink by the control unit 110 (see Fig. 1) of the printing apparatus 12 based on the print data.

As described above, the printing apparatus 12 of the present example forms the transmission rate control layer 204 by further using the clear ink in addition to the white ink. Furthermore, in the present example, at least the medium-transmission region 304 and the high-transmission region 306 are formed using the white ink and the clear ink. Then, amounts of the clear ink in the medium-transmission region 304 and the high-transmission region 306 are set so as to compensate for a difference in the amount of the white ink, as schematically illustrated as CL compensation in the figure. In this case, it can be considered that the amount of the clear ink per unit area changes according to the amount of the white ink per unit area in each region. In this case, the amount of the clear ink per unit area in the high-transmission region 306 is larger than the amounts of the clear ink per unit area in the medium-transmission region 304 and the low-transmission region 302. The amount of the clear ink in the medium-transmission region 304 is larger than the amount of the clear ink in the low-transmission region 302. With such a configuration, unintended irregularities and the like can be appropriately prevented from occurring in the transmission rate control layer 204 due to the difference in the white ink depending on the region. Accordingly, unintended irregularities can be appropriately prevented from occurring in the image layer 202 formed so as to overlap the transmission rate control layer 204. Therefore, according to the present example, the image layer 202 and the transmission rate control layer 204 can be appropriately formed to overlap each other on the medium 50.

Furthermore, in the present example, a layer having a uniform thickness is formed as the transmission rate control layer 204. With such a configuration, it is possible to more appropriately prevent occurrence of unintended irregularities in the transmission rate control layer 204. The fact that the thickness of the layer is uniform can be considered as the fact that the thickness is substantially uniform according to a precision of the design to be expressed by the printed matter 52 or the like. Further, the fact that the thickness of the layer is uniform can also be considered as the fact that the thickness in design is uniform or the like. More specifically, as in the present example, in a case of the transmission rate control layer 204 having the plurality of regions (the low-transmission region 302, the medium-transmission region 304, and the high-transmission region 306) having different light transmission rates, the uniform thickness can be considered that there is no difference between the thicknesses of the plurality of regions in design. Furthermore, in this case, it is conceivable to perform the compensation using the clear ink as described above such that the thicknesses of the plurality of regions in design become the same as each other.

Here, for example, it is conceivable to form the low-transmission region 302 with only the white ink without using the clear ink. In this case, the amount of the clear ink in the low-transmission region 302 can be considered to be zero. Furthermore, in Fig. 2(b), for convenience of illustration, the amounts of the white ink used for forming the low-transmission region 302, the medium-transmission region 304, and the high-transmission region 306 are illustrated as if layers of the white ink overlap each other with different thicknesses of a large thickness, a medium thickness, and a small thickness as in the figure. Furthermore, in accordance with such an expression regarding the white ink, the amount of the clear ink for each region is also illustrated as if layers of the clear ink overlap each other with different thicknesses. However, at the time of actually forming the transmission rate control layer 204, for example, each region of the transmission rate control layer 204 may be formed such that the white ink layer and the clear ink layer are appropriately mixed instead of being clearly separated from each other as in the illustrated configuration. As described above, the inkjet heads 122 (see Fig. 1) for the white ink and the clear ink of the present example are arranged side by side in the main scanning direction with positions in the sub scanning direction aligned. In this case, the inkjet heads 122 for the white ink and the clear ink may eject the ink in the same main scan at the same position on the medium 50. Furthermore, in this case, the transmission rate control layer 204 can be considered to have a configuration in which both the white ink and the clear ink are included in the same ink layer. Even with such a configuration, the light transmission rates of the low-transmission region 302, the medium-transmission region 304, and the high-transmission region 306 can be appropriately made different from each other by making the amounts of the white ink per unit area different from each other.

Furthermore, in a modified example of a method of forming the transmission rate control layer 204, it is conceivable to form the medium-transmission region 304 and the high-transmission region 306 in a configuration in which the white ink layer and the clear ink layer are separated from each other. In this case, one of the white ink layer and the clear ink layer is formed first, and the other is formed thereon by forming the white ink layer and the clear ink layer by different main scans. In this case, the transmission rate control layer 204 including the low-transmission region 302, the medium-transmission region 304, and the high-transmission region 306 can also be appropriately formed.

Furthermore, in the present example, the light transmission rates in the regions are set such that light transmission according to an intensity of light with which irradiation is performed varies, for example, as illustrated in Fig. 2(c). Fig. 2(c) illustrates a graph in which, for a case of performing irradiation with light having a plurality of levels of intensity indicated as light having a low light intensity, light having a medium light intensity, and light having a high light intensity in the figure, a horizontal axis represents a W input, which is a parameter corresponding to the amount of the white ink per unit area, and a vertical axis represents a transmission density, which is a parameter corresponding to an intensity of light at which the light transmission occurs when an ink layer corresponding to a value of the W input is irradiated with light. Then, the low-transmission region 302 of the present example is formed such that the light transmission does not occur even when irradiated with the light having a predetermined high light intensity. The medium-transmission region 304 is formed such that the light transmission occurs when irradiated with the light having the high light intensity, and the light transmission does not occur when irradiated with the light having a medium or lower light intensity (low to medium light intensity) that is lower than the high light intensity. In addition, the high-transmission region 306 is formed such that the light transmission occurs when irradiated with light having a low to medium light intensity.

Furthermore, in the present example, by forming the transmission rate control layer 204 and the image layer 202 having such a configuration in an overlapping manner, a design as illustrated in Fig. 3 is expressed in the printed matter 52, for example. Fig. 3 illustrates an example of the design expressed in the printed matter 52. Fig. 3(a) illustrates an example of a configuration of the image layer 202 and the transmission rate control layer 204 in the printed matter 52. Fig. 3(b) illustrates an example of the design expressed using the printed matter 52. In the illustrated configuration, an illustration of the sun is expressed in the image layer 202. In addition, in the transmission rate control layer 204, a pattern corresponding to the transmissive image is expressed by the medium-transmission region 304 and the high-transmission region 306 by setting a part as the medium-transmission region 304 and the high-transmission region 306 and setting the other part as the low-transmission region 302. In addition, as the pattern corresponding to the transmissive image, a pattern representing eyes and a mouth of a smile mark is expressed at a position overlapping the illustration of the sun in the image layer 202 by the medium-transmission region 304. Then, a pattern representing a cloud is expressed around the illustration of the sun in the image layer 202, by the high-transmission region 306.

When the printed matter 52 is irradiated with rear-surface light, which is light with which the printed matter 52 is irradiated, from a side opposite to the observation-surface side, the light is transmitted through a part of the transmission rate control layer 204 according to an intensity of the rear-surface light, and a watermark pattern becomes visible on the observation-surface side. For example, in a case where the printed matter 52 is irradiated with the rear-surface light having an intensity described above as the high light intensity, watermark patterns corresponding to the medium-transmission region 304 and the high-transmission region 306 become visible. In addition, in a case where the printed matter 52 is irradiated with the rear-surface light having an intensity described above as the low to medium light intensity, a watermark pattern corresponding to the high-transmission region 306 becomes visible. Fig. 3(b) illustrates an example of a change in the design of the printed matter 52 caused by on/off of a backlight, which is a light source for irradiation with the rear-surface light and a change in the intensity of the backlight. When the backlight is turned off, an influence of the medium-transmission region 304 and the high-transmission region 306 in the transmission rate control layer 204 becomes inconspicuous, so that only the image expressed by the image layer 202 becomes visible to the observer observing the printed matter 52 from the observation-surface side. Furthermore, in a case where the backlight is turned on at the low to medium light intensity, the light emitted from the backlight is transmitted through the high-transmission region 306 in the transmission rate control layer 204, so that a pattern corresponding to a shape of the high-transmission region 306 becomes visible like a watermark pattern, in a form of being superimposed on the image expressed by the image layer 202, to the observer observing the printed matter 52 from the observation-surface side. Furthermore, in a case where the backlight is turned on at the high light intensity, the light emitted from the backlight is transmitted through the medium-transmission region 304 and the high-transmission region 306 in the transmission rate control layer 204, so that patterns corresponding to shapes of the medium-transmission region 304 and the high-transmission region 306 become visible like a watermark pattern, in a form of being superimposed on the image expressed by the image layer 202, to the observer observing the printed matter 52 from the observation-surface side.

As described above, in the present example, in the design of the printed matter 52 that is visible to the observer when the printed matter 52 is observed from the observation-surface side, an appearance of the pattern based on the shape of the high-transmission region 306 of the transmission rate control layer 204 can be changed according to whether or not irradiation with the rear-surface light is performed. In addition, an appearance of the pattern corresponding to the shape of the medium-transmission region 304 can be changed according to the intensity of the rear-surface light with which irradiation is performed. Accordingly, various watermark-pattern-like expressions of the printed matter 52 can be appropriately implemented. Furthermore, in this case, as can be understood from the above description and the like, the design in the printed matter 52 can be appropriately expressed without excessively increasing the number of ink layers. Therefore, according to the present example, various designs can be appropriately expressed using the printed matter 52 having a configuration that is not excessively complicated.

In addition, with such a characteristic of the present example, it can be considered that, as the transmission rate control layer 204 has the low-transmission region 302 and the high-transmission region 306 having different light transmission rates from each other, light is transmitted through the printed matter 52 such that the pattern corresponding to the shape of the high-transmission region 306 is visually recognizable from the observation-surface side when irradiated with the rear-surface light, and the pattern corresponding to the shape of the high-transmission region 306 becomes inconspicuous when not irradiated with the rear-surface light, for the observer observing the image layer 202 from the observation-surface side. Furthermore, in this case, it can be considered that, as the transmission rate control layer 204 further has the medium-transmission region 304, light is transmitted through the printed matter 52 such that the pattern corresponding to the shape of the medium-transmission region 304 is visually recognizable from the observation-surface side in addition to the pattern corresponding to the shape of the high-transmission region 306 when irradiated with relatively strong rear-surface light, and the pattern corresponding to the shape of the high-transmission region 306 is visually recognizable from the observation-surface side without making the pattern corresponding to the shape of the medium-transmission region 304 conspicuous when irradiated with relatively weak rear-surface light, for the observer observing the image layer 202 from the observation-surface side.

Furthermore, in the present example, the irradiation of the printed matter 52 with the rear-surface light by the backlight or the like can be considered as substantial irradiation with the rear-surface light. The absence of the irradiation with the rear-surface light can be considered as the substantial absence of the irradiation with the rear-surface light. The substantial irradiation with the rear-surface light can be considered as irradiation with the rear-surface light having an intensity required by the design to be expressed by the printed matter 52 using the irradiation with the rear-surface light. The substantial absence of the irradiation with the rear-surface light can be considered as the absence of irradiation with the rear-surface light having an intensity required by the design to be expressed by the printed matter 52 using the irradiation with the rear-surface light. Furthermore, a state in which the pattern corresponding to the shape of the high-transmission region 306 becomes inconspicuous when not irradiated with the rear-surface light can be considered as a state in which the pattern becomes substantially inconspicuous according to the precision or the like of the design to be expressed by the printed matter 52. A state in which the pattern corresponding to the shape of the medium-transmission region 304 becomes inconspicuous when irradiated with relatively weak rear-surface light can be considered as a state in which the pattern becomes substantially inconspicuous according to the precision or the like of the design to be expressed by the printed matter 52. A state in which the pattern becomes substantially inconspicuous can be considered as a state in which the pattern becomes inconspicuous in design to be expressed. Furthermore, a state in which the patterns corresponding to the shapes of the medium-transmission region 304 and the high-transmission region 306 become inconspicuous according to the design and the like to be expressed in the printed matter 52 can be considered as a state in which the patterns become relatively inconspicuous as compared with a state of expressing the watermark pattern by performing the irradiation with the rear-surface light having a required intensity. Furthermore, a state in which the patterns corresponding to the shapes of the medium-transmission region 304 and the high-transmission region 306 become inconspicuous can also be considered as a state in which the patterns become substantially invisible, depending on the design to be expressed in the printed matter 52. A state in which the pattern becomes substantially invisible can be considered as a state in which the pattern becomes invisible in design according to the precision of the design to be expressed by the printed matter 52 or the like.

Furthermore, in a case of attempting to implement watermark-pattern-like expressions corresponding to the medium-transmission region 304 and the high-transmission region 306 with the configuration as described above, for example, a difference may occur in visibility of the pattern depending on the color of the image layer 202. In this case, in particular, it is conceivable that the color of the image layer 202 is likely to affect the visibility of the pattern corresponding to the shape of the medium-transmission region 304 set to have the medium light transmission rate. Therefore, it is conceivable that the pattern corresponding to the medium-transmission region 304 can become slightly visible when the backlight is turned on at the low to medium light intensity, for example, as indicated by a broken line in Fig. 3(b), depending on a color of a portion of the image layer 202 that overlaps the medium-transmission region 304 in the transmission rate control layer 204. However, also in such a case, it can be considered that the pattern corresponding to the shape of the medium-transmission region 304 is substantially inconspicuous. Furthermore, in this case, for example, it is conceivable to adjust the visibility of the pattern corresponding to the medium-transmission region 304 by adjusting the light transmission rate of the medium-transmission region 304 according to the color of the image layer 202. Such adjustment is described in more detail below.

Furthermore, a specific configuration of the transmission rate control layer 204 is not limited to the configuration described above, and various changes can be made. In this case, it is also conceivable to change the light transmission rate in the transmission rate control layer 204 in more levels instead of changing the light transmission rate in three levels of the low-transmission region 302, the medium-transmission region 304, and the high-transmission region 306. With such a configuration, it is possible to express various designs using the printed matter 52 by changing the intensity of the rear-surface light in more levels. Furthermore, it is also conceivable to change the light transmission rate of the transmission rate control layer 204 in two levels. In this case, it can be considered that the transmission rate control layer 204 does not have the medium-transmission region 304 and has the low-transmission region 302 and the high-transmission region 306.

Furthermore, for example, it is conceivable to use a configuration illustrated in Fig. 4 as a modified example of the configuration of the transmission rate control layer 204. Fig. 4 is a diagram for describing various modified examples of the configuration of the transmission rate control layer 204. Figs. 4(a) to 4(c) illustrate the modified examples of the configuration of the transmission rate control layer 204. Except for points described below, in Fig. 4, a configuration denoted by the same reference numeral as that in Figs. 1 to 3 may have a characteristic that is the same as or similar to the configuration in Figs. 1 to 3.

In the above description, an example in which the transmission rate control layer 204 has the low-transmission region 302, the medium-transmission region 304, and the high-transmission region 306 has been mainly described. In this case, the low-transmission region 302, the medium-transmission region 304, and the high-transmission region 306 can be considered as regions formed using at least the white ink. However, the transmission rate control layer 204 may further have a clear region 308, for example, as illustrated in Fig. 4(a). In this case, the clear region 308 can be considered as a region formed only with the clear ink without using the white ink. The clear region 308 can also be considered as a portion that does not reflect light in the transmission rate control layer 204. Even with such a configuration, the transmission rate control layer 204 has the low-transmission region 302, the medium-transmission region 304, and the high-transmission region 306, and thus, the watermark-pattern-like expression in the printed matter 52 can be appropriately implemented. Furthermore, in this case, it can be considered that more various designs can be expressed as the transmission rate control layer 204 further has the clear region 308.

Furthermore, in the above description, a method of forming the medium-transmission region 304 and the high-transmission region 306 in the transmission rate control layer 204 has been mainly described for an example of a case of using the clear ink in addition to the white ink and setting the amounts of the clear ink in the medium-transmission region 304 and the high-transmission region 306 so as to compensate for the difference in the amount of the white ink. In this regard, in a case where the transmission rate control layer 204 has the low-transmission region 302, the medium-transmission region 304, and the high-transmission region 306, for example, when the transmission rate control layer 204 is formed with only the white ink, it is conceivable that unintended irregularities occur in the transmission rate control layer 204 due to a difference in the amount of the white ink per unit area depending on the position. Then, in this case, when the image layer 202 is formed so as to overlap on the transmission rate control layer 204, unintended irregularities also occur in the image layer 202, and thus, there is a possibility that the pattern corresponding to the shape of the high-transmission region 306 or the like in the transmission rate control layer 204 becomes conspicuous even when not irradiated with the rear-surface light due to shading caused by the irregularities. On the other hand, in a case where the compensation with the clear ink is performed as described above, the unintended irregularities can be appropriately prevented from occurring in the transmission rate control layer 204 and the image layer 202. Thus, it is possible to appropriately prevent the pattern corresponding to the shape of the high-transmission region 306 or the like from becoming conspicuous due to the shading caused by the irregularities.

However, it is also conceivable to express the design using such irregularities depending on the design to be expressed by the printed matter 52. In such a case, for example, as illustrated in Fig. 4(b), it is conceivable to form the medium-transmission region 304 and the high-transmission region 306 with only the white ink without using the clear ink. With such a configuration, irregularities corresponding to the medium-transmission region 304 and the high-transmission region 306 can be formed in the transmission rate control layer 204 and the image layer 202. Thus, the design using the irregularities can be appropriately expressed.

Furthermore, the transmission rate control layer 204 is not limited to a single layer formed by a printing operation for one layer, and a plurality of ink layers formed by two-layer printing or the like may be formed. In this regard, as described above, in the modified example of the method of forming the transmission rate control layer 204, it is also conceivable to form the high-transmission region 306 in a configuration in which the white ink layer and the clear ink layer are separated from each other. Then, in this case, for example, as illustrated in Fig. 4(c), it is conceivable to form the transmission rate control layer 204 including a transmissive image layer 212 and a uniform light transmission rate layer 214. In this case, the transmissive image layer 212 is an ink layer that expresses the transmissive image with the clear ink. Furthermore, in this case, for example, it is conceivable to form a portion corresponding to the transmissive image of the transmissive image layer 212 with only the clear ink and form the other portion with the white ink as illustrated in the figure. The uniform light transmission rate layer 214 is an ink layer formed so as to have a uniform light transmission rate as a whole. In this case, it is conceivable to form the uniform light transmission rate layer 214 with only the white ink. The uniform light transmission rate layer 214 may be formed using the white ink and the clear ink at a certain ratio. Furthermore, in this case, the low-transmission region 302 and the high-transmission region 306 of the transmission rate control layer 204 can be appropriately formed by forming the transmission rate control layer 204 in a configuration in which the transmissive image layer 212 and the uniform light transmission rate layer 214 overlap each other.

Furthermore, as described above, in a case of attempting to implement the watermark-pattern-like expressions by using the medium-transmission region 304 and the high-transmission region 306, for example, a difference may occur in visibility of the pattern depending on the color of the image layer 202. In this case, as described above, it is also conceivable to adjust the visibility of the pattern corresponding to the medium-transmission region 304 or the like. Furthermore, in this case, for example, it is conceivable to adjust the visibility of the pattern by using the transmission rate control layer 204 having the configuration illustrated in Fig. 5.

Fig. 5 is a diagram for describing a further modified example of the configuration of the transmission rate control layer 204. Fig. 5(a) illustrates a further modified example of the configuration of the transmission rate control layer 204. Fig. 5(b) illustrates an example of a design that is visible to the observer in a case where the backlight is turned on at the low to medium light intensity. Except for points described below, in Fig. 5, a configuration denoted by the same reference numeral as that in Figs. 1 to 4 may have a characteristic that is the same as or similar to the configuration in Figs. 1 to 4. The transmission rate control layer 204 of the present modified example has, for example, a plurality of types of medium-transmission regions 304 of which the amounts of the white ink per unit area are different from each other and which are distinguishably illustrated as medium-transmission regions 304a and 304b in the figure. Furthermore, in this case, the amount of the white ink per unit area of the medium-transmission region 304 varies depending on a color to be applied at a corresponding position in the image layer 202. The color to be applied at the corresponding position in the image layer 202 can be considered as a color of a portion of the image layer 202 that overlaps the medium-transmission region 304. Furthermore, in this case, when the color in the image layer 202 is a color with a high brightness (bright color), it can be considered that the shape of the medium-transmission region 304 easily becomes visible. Therefore, in the medium-transmission region 304 overlapping the portion of the color having the high brightness in the image layer 202, for example, it is conceivable to relatively increase the amount of the white ink per unit area to relatively decrease the light transmission rate of the medium-transmission region 304 as in the medium-transmission region 304a in the figure. Furthermore, in the medium-transmission region 304 overlapping a portion of a color having a low brightness in the image layer 202, for example, it is conceivable to relatively decrease the amount of the white ink per unit area to relatively increase the light transmission rate of the medium-transmission region 304 as in the medium-transmission region 304b in the figure.

It is conceivable that the brightness of the color of the image layer 202 in the present modified example is determined by, for example, an L value in a case where the color is indicated by a Lab color system. In this case, for example, yellow or the like can be considered as the color having the high brightness. Furthermore, for example, black or the like can be considered as the color having the low brightness. As for the amount of the white ink per unit area, for example, it is conceivable to determine a reference amount in advance, making the amount of the white ink per unit area in the medium-transmission region 304 larger than the reference amount in a case where the color in the image layer 202 is a color that easily becomes visible, and making the amount of the white ink per unit area in the medium-transmission region 304 smaller than the reference amount in a case where the color in the image layer 202 is a color that is difficult to become visible. With such a configuration, the visibility of the pattern corresponding to the shape of the medium-transmission region 304 can be appropriately adjusted. Furthermore, as for a relationship between the amount of the white ink per unit area and the reference amount thereof, the amount of the white ink per unit area may be made different from the reference amount only in one of a case where the color in the image layer 202 is a color that easily becomes visible and a case where the color in the image layer 202 is a color that is difficult to become visible. Furthermore, the amounts of the white ink per unit area in the low-transmission region 302 and the high-transmission region 306 may be, for example, amounts set in advance for the respective regions regardless of the color to be applied at the corresponding position in the image layer 202. With such a configuration, it is possible to appropriately prevent the configuration of the transmission rate control layer 204 from becoming excessively complicated.

Furthermore, in this case, in a case where the backlight is turned on at the low to medium light intensity for the printed matter 52 including the transmission rate control layer 204 of the present modified example, for example, as illustrated in Fig. 5(b), the pattern corresponding to the shape of the high-transmission region 306 becomes visible like a watermark pattern, in a form of being superimposed on the image expressed by the image layer 202, to the observer observing the printed matter 52 from the observation-surface side. Furthermore, in this case, for example, unlike the case described above with reference to Fig. 3(b), it is also possible to appropriately prevent the pattern corresponding to the medium-transmission region 304 from becoming slightly visible, and the like. Therefore, according to the present modified example, it is possible to express various designs with higher quality, and the like.

Furthermore, not only the light transmission rate of the medium-transmission region 304 but also the light transmission rate of the high-transmission region 306 may be adjusted according to the color of the image layer 202, for example, depending on the configuration of the printed matter 52, a characteristic of the ink to use, and the like as illustrated in Fig. 5(c). In this case, the transmission rate control layer 204 has, for example, a plurality of types of high-transmission regions 306 of which the amounts of the white ink per unit area are different from each other and which are distinguishably illustrated as high-transmission regions 306a and 306b in the figure. Furthermore, in this case, the amount of the white ink per unit area in the high-transmission region 306 varies depending on a color to be applied at a corresponding position in the image layer 202. With such a configuration, the visibility of the pattern corresponding to the shape of the high-transmission region 306 can be appropriately adjusted. Furthermore, in this case, it is conceivable to set the amount of the white ink per unit area in the low-transmission region 302 to a predetermined amount regardless of the color to be applied at the corresponding position in the image layer 202. Furthermore, it is conceivable to making the amount of the white ink per unit area in the medium-transmission region 304 vary according to the color to be applied at the corresponding position in the image layer 202, for example, in the same way as or a similar way to the case illustrated in Fig. 5(a). Furthermore, it is also conceivable to set the amount of the white ink per unit area in the medium-transmission region 304 to a predetermined amount regardless of the color to be applied at the corresponding position in the image layer 202. Furthermore, it is also conceivable to use a configuration for adjusting the amount of the white ink per unit area in the low-transmission region 302, for the transmission rate control layer 204 having a configuration not including the medium-transmission region 304.

Furthermore, the configuration of the printed matter 52 is not limited to the configuration described above, and various modifications can be made. Fig. 6 is a diagram for describing a modified example of the configuration of the printed matter 52. Figs. 6(a) and 6(b) illustrate the modified example of the configuration of the printed matter 52. Fig. 6(c) illustrates an example of how to use the printed matter 52 having the configuration illustrated in Fig. 6(b). Except for points described below, in Fig. 6, a configuration denoted by the same reference numeral as that in Figs. 1 to 5 may have a characteristic that is the same as or similar to the configuration in Figs. 1 to 5.

Regarding the configuration of the printed matter 52 described above, for example, Fig. 2(a) illustrates an example of a case where the transmission rate control layer 204 is formed on the medium 50, and the image layer 202 is formed thereon. On the other hand, in the printed matter 52, for example, it is conceivable that the image layer 202 is formed between the medium 50 and the transmission rate control layer 204 as illustrated in Fig. 6(a). Such a configuration of the printed matter 52 can be considered as a configuration in which the image layer 202 is formed on the medium 50 and the transmission rate control layer 204 is formed thereon. In this case, it can be considered that a side of the medium 50 that is opposite to a side where the image layer 202 and the transmission rate control layer 204 are formed is the observation-surface side, and the image layer 202 is observed by the observer through the translucent medium 50. Even with such a configuration, the transmission rate control layer 204 is formed on a side of the image layer 202 that is opposite to the observation-surface side, and thus, a watermark-pattern-like expression can be appropriately implemented in the printed matter 52.

Furthermore, as in the configuration illustrated in Fig. 6(a), when the image layer 202 is first formed on the medium 50 and the transmission rate control layer 204 is formed thereon, even in a case where irregularities occur in the transmission rate control layer 204 due to a difference in the amount of the white ink per unit area or the like, the irregularities do not occur in the already formed image layer 202. Therefore, in this case, it can be considered that an appearance of the image layer 202 is unlikely to be affected even in a case where irregularities have occurred in the transmission rate control layer 204. Therefore, in a case where the image layer 202 and the transmission rate control layer 204 overlap each other as in the configuration illustrated in Fig. 6(a), it is also conceivable to form the transmission rate control layer 204 without using the clear ink for compensation.

Furthermore, in a further modified example of the configuration of the printed matter 52, for example, it is also conceivable to express the design by using a plurality of image layers 202 as illustrated in Fig. 6(b). The printed matter 52 of the present modified example includes two image layers 202 and one transmission rate control layer 204 on the medium 50. In this case, the transmission rate control layer 204 is formed between the two image layers 202. Furthermore, one of the two image layers 202 can be considered as a first image layer 202 overlapping the transmission rate control layer 204 on one side of the transmission rate control layer 204. The other of the two image layers 202 can be considered as a second image layer 202 overlapping the transmission rate control layer 204 on the other side of the transmission rate control layer 204. Furthermore, in this case, an observation-surface side for the first image layer 202 and an observation-surface side for the second image layer 202 can be considered separately for the printed matter 52. Then, it can be considered that the observation-surface side for the second image layer 202 is a side opposite to the observation-surface side for the first image layer 202. Furthermore, in this case, it can be considered that the transmission rate control layer 204 is formed on a side of the first image layer 202 that is opposite to the observation-surface side for the first image layer 202, and is formed on a side of the second image layer 202 that is opposite to the observation-surface side for the second image layer 202. With such a configuration, an image visible to the observer can be variously changed according to a difference in an observation direction in which the printed matter 52 is observed, such as one side or the other side of the printed matter 52, and an influence of an environment in which one side or the other side of the printed matter 52 is brighter.

For example, as illustrated in Fig. 6(c), the printed matter 52 of the present modified example may be used by being pasted to a window glass 150. In this case, the printed matter 52 can be considered as a printed matter on which watermark printing for wind signs is performed. Furthermore, the two image layers 202 in the printed matter 52 can be considered to be the image layer 202 on an outdoor side and the image layer 202 on an indoor side. In this case, when the printed matter 52 is observed from the outdoor side of the window glass 150, light incident on the printed matter 52 from the indoor side becomes the rear-surface light. In addition, when the printed matter 52 is observed from the indoor side of the window glass 150, light incident on the printed matter 52 from the outdoor side becomes the rear-surface light. Therefore, for example, in daytime or the like, when the printed matter 52 is observed from the outdoor side in a state in which the outdoor side is relatively bright and the indoor side is relatively dark, a condition similar to a condition that the irradiation with the rear-surface light is not performed is satisfied, and thus, an image expressed by the image layer 202 on the outdoor side becomes visible to the observer in a state in which the watermark effect does not occur. In addition, when the printed matter 52 is observed from the indoor side in this state, the condition that the irradiation with the rear-surface light is not performed is satisfied, and the watermark effect occurs, and thus, an image expressed by the image layer 202 on the indoor side becomes visible to the observer together with the transmissive image represented by the transmission rate control layer 204. In addition, for example, in nighttime or the like, when the printed matter 52 is observed from the outdoor side in a state in which the outdoor side is relatively dark and the indoor side on which an illumination is turned on is relatively bright, a condition that the irradiation with the rear-surface light is performed is satisfied, and the watermark effect occurs, and thus, the image expressed by the image layer 202 on the outdoor side becomes visible to the observer together with the transmissive image represented by the transmission rate control layer 204. In addition, when the printed matter 52 is observed from the indoor side in this state, a condition similar to the condition that the irradiation with the rear-surface light is not performed is satisfied, and thus, the image expressed by the image layer 202 on the indoor side becomes visible to the observer in a state in which the watermark effect does not occur. Therefore, with such a configuration, more various designs can be appropriately expressed.

Hereinabove, an example of the configuration of the printed matter 52 in a case of forming the transmission rate control layer 204 using the white ink has been mainly described. In a modified example of the configuration of the printed matter 52, however, it is also conceivable to form the transmission rate control layer 204 using a characteristic of the light absorbing ink such as the black ink, or the like. Furthermore, in this case, it is conceivable to use the configuration illustrated in Fig. 7 for the configurations of the printed matter 52 and the transmission rate control layer 204. Fig. 7 is a diagram for describing a further modified example of the configurations of the printed matter 52 and the transmission rate control layer 204. Fig. 7(a) illustrates the modified example of the configuration of the printed matter 52. Fig. 7(b) illustrates an example of the configuration of the transmission rate control layer 204 in the printed matter 52 of the present variant. Except for points described below, in Fig. 7, a configuration denoted by the same reference numeral as that in Figs. 1 to 6 may have a characteristic that is the same as or similar to the configuration in Figs. 1 to 6.

The printed matter 52 of the present modified example includes the image layer 202, the transmission rate control layer 204, and a light reflective layer 206. In this case, the printed matter 52 can be considered to include the light reflective layer 206 separately from the transmission rate control layer 204. In addition, the transmission rate control layer 204 of the present modified example overlaps the image layer 202 with the light reflective layer 206 interposed therebetween. In this case, for example, it is conceivable to form the transmission rate control layer 204, the light reflective layer 206, and the image layer 202 in this order on the medium 50 as illustrated in the figure. In a further modified example of the configuration of the printed matter 52, the image layer 202, the light reflective layer 206, and the transmission rate control layer 204 may be formed in this order on the medium 50. The light reflective layer 206 of the present modified example is a light reflective layer formed using the white ink. It can be considered that the light reflective layer 206 functions as a background of the image layer 202 by being formed on a side of the image layer 202 that is opposite to the observation-surface side. Furthermore, a layer that uniformly transmits a certain degree of light when irradiated with the rear-surface light having a predetermined intensity or higher is formed as the light reflective layer 206 of the present modified example.

Furthermore, the transmission rate control layer 204 of the present modified example is a layer formed using the black ink, and has the low-transmission region 302, the medium-transmission region 304, and the high-transmission region 306, which are a plurality of types of regions in which amounts of the black ink per unit area are different from each other. In this case, the light transmission rate of the low-transmission region 302 and the light transmission rate of the high-transmission region 306 are made different from each other by making the amount of the black ink per unit area in the high-transmission region 306 smaller than the amount of the black ink per unit area in the low-transmission region 302. Furthermore, the light transmission rate of the medium-transmission region 304 and the light transmission rate of the low-transmission region 302 are made different by making the amount of the black ink in the medium-transmission region 304 smaller than the amount of the black ink in the low-transmission region 302. Furthermore, in this case, the light transmission rate of the medium-transmission region 304 and the light transmission rate of the high-transmission region 306 are made different by making the amount of the black ink in the high-transmission region 306 smaller than the amount of the black ink in the medium-transmission region 304. In this case, it can be considered that the amount of the black ink per unit area in the medium-transmission region 304 is larger than the amount of the black ink in the high-transmission region 306 and smaller than the amount of the black ink in the low-transmission region 302.

Furthermore, in Fig. 7(b), as indicated by K100, K50, and K20, the amount of the black ink per unit area indicates a configuration of the transmission rate control layer 204 in which the amount of the black ink in the medium-transmission region 304 is 50 and the amount of the black ink in the high-transmission region 306 is 20 in a case where the amount of the black ink in the low-transmission region 302 is 100. Even with such a configuration, the transmission rate control layer 204 having a plurality of regions having different light transmission rates can be implemented, so that various designs can be expressed according to whether or not the irradiation with the rear-surface light is performed and according to the intensity of the rear-surface light. In this case, light can be transmitted through the printed matter 52 such that the pattern corresponding to the shape of the medium-transmission region 304 is visually recognizable from the observation-surface side in addition to the pattern corresponding to the shape of the high-transmission region 306 when irradiated with relatively strong rear-surface light, and the pattern corresponding to the shape of the high-transmission region 306 is visually recognizable from the observation-surface side without making the pattern corresponding to the shape of the medium-transmission region 304 conspicuous when irradiated with relatively weak rear-surface light, for the observer observing the image layer 202 from the observation-surface side. Also in the present modified example, by using the image layer 202 and the transmission rate control layer 204, various designs can be appropriately expressed using the printed matter 52 having a configuration that is not excessively complicated.

Furthermore, as described above, in the present modified example, the light reflective layer 206 is formed between the image layer 202 and the transmission rate control layer 204. In this case, for example, it is conceivable that an influence on the image layer 202 is reduced even in a case where unintended irregularities or the like occur in the transmission rate control layer 204 due to a difference in the amount of the black ink per unit area or the like. Therefore, in the present modified example, it is conceivable to form the transmission rate control layer 204 without performing compensation with the clear ink. In this case, it is conceivable to form the transmission rate control layer 204 with only the black ink. Furthermore, the transmission rate control layer 204 may be formed by further using the clear ink for compensation in addition to the black ink depending on the precision of the design to be expressed in the printed matter or the like.

Next, an operation of creating (manufacturing) the printed matter 52 in the printing system 10 (see Fig. 1) will be described in more detail. Fig. 8 is a flowchart illustrating an example of the operation of creating the printed matter 52 in the printing system 10. As described above, in the printing system 10 of the present example, the printing apparatus 12 (see Fig. 1) performs the printing operation based on the print data supplied from the control PC 14 (see Fig. 1) to create the printed matter 52. In this case, before these operations, a designer or the like who is in charge of design of the medium 50 determines the design of the printed matter 52 (S102). In this case, for example, in the control PC 14 or another computer, a program (application software or the like) that can predict a state of the printed matter 52 after completion is executed, and the design of the printed matter 52 is determined based on an instruction of the designer. As such a program, it is conceivable to use commercially available known design software or the like. Furthermore, as such a program, it is also conceivable to use plug-in software or the like for software used to generate the print data in the control PC 14 or the like. Furthermore, in step S102 of the present example, the computer that executes this program generates an image showing the printed matter 52 to be created in response to the instruction of the designer. Furthermore, as such an image, image data representing an observation image which is an image observed from the observation-surface side in the image layer 202 (see Fig. 2) and image data representing the transmissive image expressed by the transmission rate control layer 204 (see Fig. 2) are generated. The observation image can be considered as an image drawn with the ink in the image layer 202.

In this case, for example, the computer such as the control PC 14 executes a program for causing the computer to perform processing for generating the print data, thereby generating the print data based on the image generated in step S102 (S104). In this case, the computer generates the print data by performing the RIP processing or the like on the image data representing the observation image and the transmissive image according to a printing condition used at the time of printing by the printing apparatus 12. Furthermore, in S104 of the present example, the computer that executes this program performs image layer data generation processing and light transmission rate adjustment layer data generation processing to generate the print data. In this case, the image layer data generation processing can be considered as processing of generating data representing the image layer 202, or the like. The light transmission rate adjustment layer data generation processing can be considered as processing of generating data representing the transmission rate control layer 204, or the like. Furthermore, in the image layer data generation processing, the data representing the image layer 202 is generated by performing the RIP processing on the image data based on the image data representing the observation image generated in step S102. In the light transmission rate adjustment layer data generation processing, the data representing the transmission rate control layer 204 is generated by performing the RIP processing on the image data based on the image data representing the transmissive image generated in step S102. By these operations, the computer generates the print data including the data representing the image layer 202 and the data representing the transmission rate control layer 204.

After the print data is generated in step S104, the print data is supplied to the printing apparatus 12 to cause the printing apparatus 12 to perform the printing operation and create the printed matter 52 (S106). According to the present example, the printed matter 52 including the image layer 202 and the transmission rate control layer 204 can be appropriately created. Accordingly, the printed matter 52 on which a watermark-pattern-like expression can be implemented can be appropriately created. Furthermore, as described above, it is also conceivable to create, as the printed matter 52, the printed matter 52 having a configuration including the plurality of image layers 202 or the printed matter 52 further including the light reflective layer. In these cases, it is conceivable to determine the design according to the configuration of the printed matter 52 in step S102 and generate the print data according to the configuration of the printed matter 52 in step S104. In these cases as well, the printed matter 52 on which an watermark-pattern-expression can be implemented can be appropriately created by performing the image layer data generation processing, the light transmission rate adjustment layer data generation processing, and the like to generate the print data.

Subsequently, supplementary description and the like regarding the configuration described above will be provided. Hereinafter, for convenience of description, the present example may include the modified examples and the like described above. As described above, in the present example, the printed matter 52 including the image layer 202, the transmission rate control layer 204, and the like is created. In this case, the image layer 202 and the transmission rate control layer 204 may be formed of one ink layer (single ink layer) or may be formed of a plurality of ink layers. In this case, one ink layer can be considered as an ink layer formed by the main scan corresponding to a pass number designated in the printing condition. Furthermore, the plurality of ink layers can be considered as a state in which a plurality of such one ink layers overlap each other.

Furthermore, as described above, a configuration using the white ink and the clear ink and a configuration using the black ink can be considered for the transmission rate control layer 204. In these cases, it can be considered that the transmission rate control layer 204 is formed of an achromatic ink. Furthermore, in a further modified example of the configuration of the transmission rate control layer 204, it is also conceivable to form at least a part of the transmission rate control layer 204 using a chromatic ink. In this case, for example, it is conceivable to use an ink of at least one of yellow, magenta, and cyan as the chromatic ink. Furthermore, in this case, it is conceivable to color a part of the transmission rate control layer 204 with the chromatic ink or the like. With such a configuration, more various designs can be expressed by the printed matter 52. In this case, the clear region 308 in the configuration illustrated in Fig. 4(a) and the portion formed with the clear ink in the configuration illustrated in Fig. 4(c) may be formed with the chromatic ink instead of the clear ink.

Furthermore, in a case of forming the transmission rate control layer 204 using the white ink and the clear ink, as described above, unintended irregularities can be appropriately prevented from occurring in the transmission rate control layer 204 and the image layer 202 by using the clear ink so as to compensate for the difference in the amount of white ink per unit area. In this case, by preventing the occurrence of such irregularities, processing can be more appropriately performed in a case of performing lamination processing or the like on the printed matter 52. Furthermore, in this case, the printed matter 52 having a high weather resistance suitable for outdoor advertisement and the like can be more appropriately created by performing the lamination processing and the like.

Furthermore, even in a case of forming the transmission rate control layer 204 using the black ink, for example, it is also conceivable to create the printed matter 52 including the plurality of image layers 202 like the printed matter 52 described using Figs. 6(b) and 6(c). In this case, it is conceivable to change the configuration illustrated in Fig. 6(b) to a configuration in which the transmission rate control layer 204 is formed using the black ink, and then, the light reflective layer is further added above and below the transmission rate control layer 204. In this case, it can be considered that the image layers 202 on one side and the other side of the transmission rate control layer 204 overlap the transmission rate control layer 204 with the light reflective layers interposed therebetween. Furthermore, the printed matter 52 can be considered to have a five-layer configuration. Even with such a configuration, it is possible to appropriately create the printed matter 52 and the like on which the watermark printing for wind signs is performed.

### INDUSTRIAL APPLICABILITY

The present invention can be suitably used for a printed matter, for example.

### REFERENCE SIGNS LIST

- 10: Printing system
- 102: Head unit
- 104: Platen
- 106: Main scan driving unit
- 108: Sub scan driving unit
- 110: Control unit
- 12: Printing apparatus
- 122: Inkjet head
- 124: Ultraviolet light source
- 14: Control PC
- 150: Window glass
- 202: Image layer
- 204: Transmission rate control layer
- 206: Light reflective layer
- 212: Transmissive image layer
- 214: Uniform light transmission rate layer
- 302: Low-transmission region
- 304: Medium-transmission region
- 306: High-transmission region,
- 308: Clear region
- 50: Medium
- 52: Printed matter

## Claims

1. A printed matter in which a plurality of ink layers overlap each other, the printed matter comprising:
an image layer that is one of the ink layers in which an image to be observed from a predetermined observation-surface side is drawn with ink; and
a light transmission rate adjustment layer that is one of the ink layers formed on a side of the image layer that is opposite to the observation-surface side, wherein
the light transmission rate adjustment layer has a low-transmission region and a high-transmission region,
a light transmission rate of the high-transmission region is higher than a light transmission rate of the low-transmission region, and
the light transmission rate adjustment layer causes light to be transmitted through the printed matter such that a pattern corresponding to a shape of the high-transmission region is visually recognizable by an observer observing the image layer from the observation-surface side, when irradiated with rear-surface light, which is light with which the printed matter is irradiated from a side opposite to the observation-surface side, and
causes light to be transmitted through the printed matter such that the pattern corresponding to the shape of the high-transmission region becomes inconspicuous when not irradiated with the rear-surface light.

2. The printed matter as set forth in claim 1, wherein the light transmission rate adjustment layer is a layer formed using a light reflective ink, and the light transmission rate of the low-transmission region and the light transmission rate of the high-transmission region are made different from each other by making an amount of the light reflective ink per unit area in the high-transmission region smaller than an amount of the light reflective ink per unit area in the low-transmission region.

3. The printed matter as set forth in claim 2, wherein the light transmission rate adjustment layer is a layer formed by further using a clear ink, which is a colorless and translucent ink, and is formed such that an amount of the clear ink per unit area in the high-transmission region is larger than an amount of the clear ink per unit area in the low-transmission region.

4. The printed matter as set forth in claim 2, wherein
the light transmission rate adjustment layer further has a medium-transmission region which is a region having a light transmission rate higher than the light transmission rate of the low-transmission region and lower than the light transmission rate of the high-transmission region,
in the medium-transmission region, an amount of the light reflective ink per unit area is larger than the amount of the light reflective ink per unit area in the high-transmission region and smaller than the amount of the light reflective ink per unit area in the low-transmission region, and
the light transmission rate adjustment layer causes light to be transmitted through the printed matter such that a pattern corresponding to a shape of the medium-transmission region is visually recognizable by the observer in addition to the pattern corresponding to the shape of the high-transmission region when irradiated with relatively strong rear-surface light, and causes light to be transmitted through the printed matter such that the pattern corresponding to the shape of the medium-transmission region becomes inconspicuous and the pattern corresponding to the shape of the high-transmission region is visually recognizable by the observer when irradiated with relatively weak rear-surface light.

5. The printed matter as set forth in claim 4, wherein
an amount of the light reflective ink at each portion of the medium-transmission region varies depending on a color to be applied at a position corresponding to that portion in the image layer, and
the amounts of the light reflective ink per unit area in the low-transmission region and the high-transmission region are amounts set in advance for each region regardless of the color to be applied in the image layer.

6. The printed matter as set forth in claim 2, wherein
an amount of the light reflective ink at each portion of the high-transmission region varies depending on a color to be applied at a position corresponding to that portion in the image layer, and
the amount of the light reflective ink per unit area in the low-transmission region is a predetermined amount regardless of the color to be applied in the image layer.

7. The printed matter as set forth in claim 2, wherein the light transmission rate adjustment layer is a layer having a uniform thickness.

8. The printed matter as set forth in claim 1, further comprising:
a first image layer that overlaps the light transmission rate adjustment layer on one side in a thickness direction of the light transmission rate adjustment layer; and
a second image layer that overlaps the light transmission rate adjustment layer on the other side in the thickness direction of the light transmission rate adjustment layer.

9. The printed matter as set forth in claim 1, further comprising a light reflective layer formed using a light reflective ink,
wherein the light transmission rate adjustment layer overlaps the image layer with the light reflective layer interposed therebetween.

10. The printed matter as set forth in claim 9, wherein the light transmission rate adjustment layer is a layer formed using a light absorbing ink, and the light transmission rate of the low-transmission region and the light transmission rate of the high-transmission region are made different from each other by making an amount of the light absorbing ink per unit area in the high-transmission region smaller than an amount of the light absorbing ink per unit area in the low-transmission region.

11. The printed matter as set forth in claim 10, wherein
the light transmission rate adjustment layer further has a medium-transmission region which is a region having a light transmission rate higher than the light transmission rate of the low-transmission region and lower than the light transmission rate of the high-transmission region,
in the medium-transmission region, an amount of the light absorbing ink per unit area is larger than the amount of the light absorbing ink per unit area in the high-transmission region and smaller than the amount of the light absorbing ink per unit area in the low-transmission region, and
the light transmission rate adjustment layer causes light to be transmitted through the printed matter such that a pattern corresponding to a shape of the medium-transmission region is visually recognizable by the observer in addition to the pattern corresponding to the shape of the high-transmission region when irradiated with relatively strong rear-surface light, and causes light to be transmitted through the printed matter such that the pattern corresponding to the shape of the medium-transmission region becomes inconspicuous and the pattern corresponding to the shape of the high-transmission region is visually recognizable by the observer when irradiated with relatively weak rear-surface light.

12. A printed matter manufacturing method for creating a printed matter, the manufacturing method comprising:
creating the printed matter in which a plurality of ink layers overlap each other by ejecting ink onto a medium by a printing apparatus, wherein
the printed matter includes:
an image layer that is one of the ink layers in which an image to be observed from a predetermined observation-surface side is drawn with the ink; and
a light transmission rate adjustment layer that is one of the ink layers formed on a side of the image layer that is opposite to the observation-surface side,
the light transmission rate adjustment layer has a low-transmission region and a high-transmission region,
a light transmission rate of the high-transmission region is higher than a light transmission rate of the low-transmission region, and
the light transmission rate adjustment layer causes light to be transmitted through the printed matter such that a pattern corresponding to a shape of the high-transmission region is visually recognizable by an observer observing the image layer from the observation-surface side, when irradiated with rear-surface light, which is light with which the printed matter is irradiated from a side opposite to the observation-surface side, and
causes light to be transmitted through the printed matter such that the pattern corresponding to the shape of the high-transmission region becomes inconspicuous when not irradiated with the rear-surface light.

13. A program for generating print data for controlling a printing operation of a printing apparatus, the program causing a computer to perform:
image layer data generation processing of generating data representing an image layer that is an ink layer in which an observation image that is an image to be observed from a predetermined observation-surface side is drawn with ink; and
light transmission rate adjustment layer data generation processing of generating data representing a light transmission rate adjustment layer that is an ink layer formed on a side of the image layer that is opposite to the observation-surface side and has a low-transmission region and a high-transmission region provided with a higher light transmission rate than the low-transmission region, wherein
in the image layer data generation processing, the data representing the image layer is generated based on image data representing the observation image, and
in the light transmission rate adjustment layer data generation processing, the data representing the light transmission rate adjustment layer is generated based on image data representing a transmissive image that is an image that becomes visible in a printed matter under a predetermined condition.

14. A printing apparatus for printing, the printing apparatus comprising:
an ejection head configured to eject ink; and
a control unit configured to control an operation of the ejection head, wherein
the control unit is configured to control the operation of the ejection head to cause the ejection head to create a printed matter in which a plurality of ink layers overlap each other,
the printed matter includes:
an image layer that is one of the ink layers in which an image to be observed from a predetermined observation-surface side is drawn with the ink; and
a light transmission rate adjustment layer that is one of the ink layers formed on a side of the image layer that is opposite to the observation-surface side,
the light transmission rate adjustment layer has a low-transmission region and a high-transmission region,
a light transmission rate of the high-transmission region is higher than a light transmission rate of the low-transmission region, and
the light transmission rate adjustment layer causes light to be transmitted through the printed matter such that a pattern corresponding to a shape of the high-transmission region is visually recognizable by an observer observing the image layer from the observation-surface side, when irradiated with rear-surface light, which is light with which the printed matter is irradiated from a side opposite to the observation-surface side, and
causes light to be transmitted through the printed matter such that the pattern corresponding to the shape of the high-transmission region becomes inconspicuous when not irradiated with the rear-surface light.
